# EUROPEAN PATENT APPLICATION

(11) **EP 3 582 035 A1**
(43) Date of publication of application: **18.12.2019**
(21) Application number: 18178148.5
(22) Date of filing: 16.06.2018
(51) Int. Cl.: G05B 19/042, H04L 12/28

(54) **REMOTE CONTROL SYSTEM FOR CONTROLLING AN OPERATION OF A DOMESTIC APPLIANCE**

(71) Applicant: ELECTROLUX APPLIANCES AKTIEBOLAG, 105 45 Stockholm (SE)
(72) Inventor: CLADI, Stefano, 47100 Forli (IT); REUL, Kurt, 91541 Rothenburg ob der Tauber (DE)
(74) Representative: Electrolux Group Patents

(57) **Abstract**

The present invention relates to a remote control system for controlling at least one operation of one or more domestic appliances (12, 14). Said remote control system comprises a remote control device (10) for inputting one or more set parameter values relating to the operation of the domestic appliance (12, 14). Further, the remote control system comprises a data cloud (16) or data base connected or connectable to the remote control device (10) via a primary bidirectional connection (18). Moreover, the remote control system comprises at least one control device for controlling the domestic appliance (12, 14) and connected or connectable to the data cloud (16) or data base via a secondary bidirectional connection (20, 22).

## Description

The present invention relates to a remote control system for controlling at least one operation of one or more domestic appliances. Further, the present invention relates to a method for remote controlling at least one operation of one or more domestic appliances.

Usually, the operation of a domestic appliance requires the presence of the user. The domestic appliance is controllable by the user via a user interface. For example, the user interface is an integrated part of the domestic appliance or is arranged close to said domestic appliance. Further, modern domestic appliances are connectable to the internet. This allows data exchange between the domestic appliance and a server.

It is an object of the present invention to provide a remote control system for a domestic appliance by low complexity, wherein the amount of data exchange is minimised.

The object is achieved by the remote control system according to claim 1.

According to the present invention a remote control system for controlling at least one operation of one or more domestic appliances is provided, wherein said remote control system comprises:
- a remote control device for inputting one or more set parameter values relating to the operation of the domestic appliance,
- a data cloud or data base connected or connectable to the remote control device via a primary bidirectional connection, and
- at least one control device for controlling the domestic appliance and connected or connectable to the data cloud or data base via a secondary bidirectional connection.

The main idea of the present invention is the connection of the remote control device to the control device of the domestic appliance via the data cloud or data base, wherein the set parameter values are transferred by the remote control device. The set parameter values include small data volume, so that the amount of data is transferred via the data cloud or data base very small. This contributes to a reliable connection between the remote control device and the control device of the domestic appliance.

In particular, the remote control system comprises at least one application program for controlling the operation of the domestic appliance, wherein said application program is stored or storable in a memory of the control device. For example, if the domestic appliance is an electric oven, the application program may include the cooking function, the temperature and the time of the cooking process. In the case of a microwave oven, the application program may include the cooking parameters, the power and the time of the heating process. In the case of an induction cooking hob, the application program may include parameters of the induction coil and the power and the time of the heating process. If the domestic appliance is a gas cooking oven, then the application program may include parameters of the gas burners and the power and the time of the heating process.

For example, the control device is an integrated part of the corresponding domestic appliance and/or arranged close to said corresponding domestic appliance.

Further, the control device may be provided for detecting actual parameter values of the operation and for sending said actual parameter values to the remote control device via the data cloud or data base.

Preferably, the remote control device includes application software for inputting the set parameter values.

Additionally, the remote control device may include application software for monitoring the actual parameter values detected by the control device.

Furthermore, the control device may be provided for sending a feedback to the remote control device via the data cloud or data base, if said control device has received the set parameter values from the remote control device. Thus, the user is informed, if his command has been received by the control device.

In particular, the primary bidirectional connection between the remote control device and the data cloud or data base is a wireless connection. Preferably, the primary bidirectional connection is a WIFI connection.

Further, the secondary bidirectional connection between the control device and the data cloud or data base may be a wireless connection.

For example, the remote control device is a smart phone, a tablet, a notebook and/or a personal computer.

For instance, at least one domestic appliance may be a cooking appliance, wherein preferably at least one cooking recipe is stored or storable in the memory of the control device.

Further, the present invention relates to a method for remote controlling at least one operation of one or more domestic appliances, wherein said method comprises the steps of:
- inputting one or more set parameter values for the operation of the domestic appliance by a remote control device,
- sending said set parameter values to a control device of the corresponding domestic appliance by the remote control device via a data cloud or data base,
- performing the operation of the domestic appliance on the basis of the set parameter values and an application program stored in a memory of the control device of the domestic appliance,
- detecting actual parameter values of the operation of the domestic appliance by the control device, and
- sending said actual parameter values to the remote control device by the control device via the data cloud or data base.

The application program may be remotely controlled or monitored by the remote control device, so that a bidirectional communication is possible.

In particular, the remote control device is connected or connectable to the data cloud or data base via a primary bidirectional connection, while the control device is connected or connectable to the data cloud or data base via a secondary bidirectional connection.

Preferably, the control device sends a feedback to the remote control device, if said control device has received the set parameter values from the remote control device.

Moreover, the method may be performed by the remote control system mentioned above.

Novel and inventive features of the present invention are set forth in the appended claims.

The present invention will be described in further detail with reference to the drawing, in which
- FIG 1: illustrates a schematic view of a remote control system according to a preferred embodiment of the present invention,
- FIG 2: illustrates a schematic flow chart diagram for selecting an existing cooking recipe according to the preferred embodiment of the present invention, and
- FIG 3: illustrates a schematic flow chart diagram of a selection of a standard cooking function and cooking parameters from a remote control device according to the preferred embodiment of the present invention.

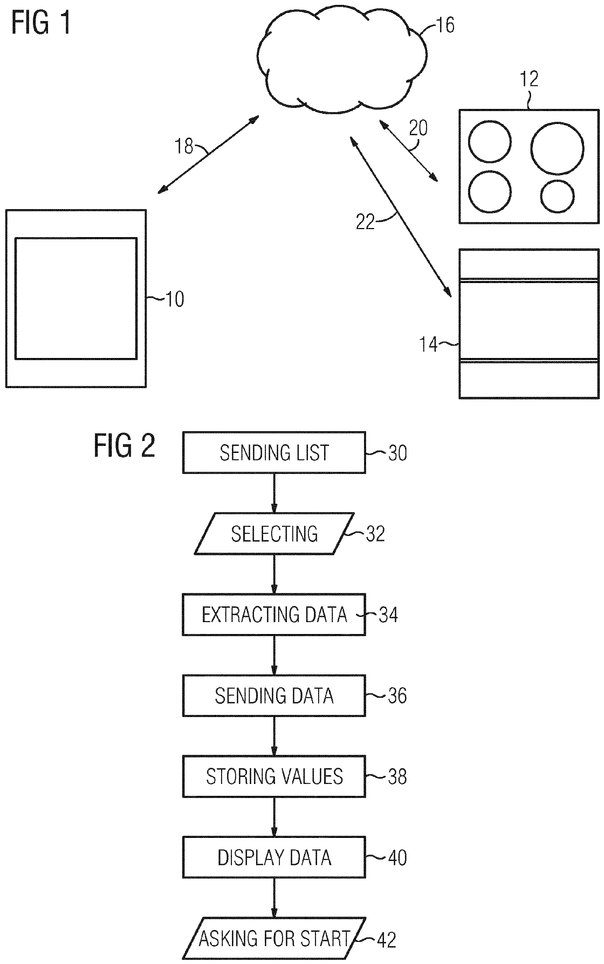

FIG 1 illustrates a schematic view of a remote control system according to a preferred embodiment of the present invention.

The remote control system comprises a remote control device 10, one or more domestic appliances 12 and 14 and a data cloud 16. The domestic appliances 12 and 14 are controlled by the remote control device 10 via the data cloud 16. In this example, the one domestic appliance is a cooking hob 12, while the other domestic appliance is a cooking oven 14. In general, the domestic appliances 12 and 14 may be arbitrary appliances like a microwave oven, a dishwasher, a washing machine, a laundry dryer or the like. The remote control device 10 may be a smart phone, a tablet, a notebook, a personal computer or the like.

The remote control device 10 is connected to the data cloud 16 via a primary bidirectional connection 18. Preferably, the primary bidirectional connection 18 is a wireless connection. Alternatively, the primary bidirectional connection 18 may be a wired connection. Moreover, the primary bidirectional connection 18 may be a combination of wireless and wired connections, wherein for instance the smart phone or tablet is connected to a router via a wireless local area network (WLAN), while the router is connected to the data cloud 16 via a local area network (LAN) or the internet.

The domestic appliances 12 and 14 are connected to the data cloud 16 via secondary bidirectional connections 22 and 24, respectively. For example, the secondary bidirectional connections 22 and 24 are formed by the local area network and/or the internet.

The domestic appliances 12 and 14 comprise a common control device or separate control device. The control device(s) may be an integrated part of the corresponding domestic appliances 12 and 14 or may be arranged close to said corresponding domestic appliance 12 and 14, respectively. Application programs for the domestic appliances 12 and 14 are stored in a memory of the control device. For example, said application programs may be provided for controlling a cooking process in the cooking oven 14 or a washing program for a washing machine. Further, cooking recipes for the cooking hob 12 and/or the cooking oven 14 may be stored in the memory of the control device.

The remote control device 10 comprises application software (APP) for inputting one or more set parameter values and sending said set parameter values to the control device(s) of the domestic appliances 12 and 14. Preferably, the control device sends a feedback to the remote control device 10, if said control device has received the set parameter values from the remote control device 10.

Additionally, the remote control device 10 comprises application software for monitoring the actual parameter values detected by the control device.

The operations of the domestic appliances 12 and 14 are performed by the application programs stored in the memory of the control device in cooperation with the set parameter values sent by the remote control device 10. The set parameter values include small data volume, so that the amount of data is transferred via the data cloud very small. In contrast, the application programs stored in the memory of the control device includes a very large amount data. It is not necessary to transfer the application programs from the remote control device 10 to the control device(s) of the domestic appliances 12 and 14. This contributes to a reliable connection between the remote control device and the control device of the domestic appliance.

FIG 2 illustrates a schematic flow chart diagram for selecting an existing cooking recipe according to the preferred embodiment of the present invention. In this example, all cooking parameters are stored in the data cloud 16 or data base, while a picture of said cooking parameters is stored in the remote control device 10.

In a first step 30 a list of available cooking processes is sent to a terminal, wherein said terminal includes at least one dedicated application software (APP). In a next step 32 a desired cooking processes is selected by the user. Then, data for the selected cooking process are extracted on the terminal in a step 34. Next, said extracted data are sent to the domestic appliance 12 and/or 14 in a step 36. Then, in a step 38 according values are stored on the control device of the domestic appliance 12 and/or 14. Next, the extracted data are displayed on the domestic appliance 12 and/or 14 in a step 40. For example, the message "a data transfer successfully done" is indicated on the terminal. At last, in a step 42 the user is asked for starting the cooking process by the application software and/or on the domestic appliance 12 and/or 14.

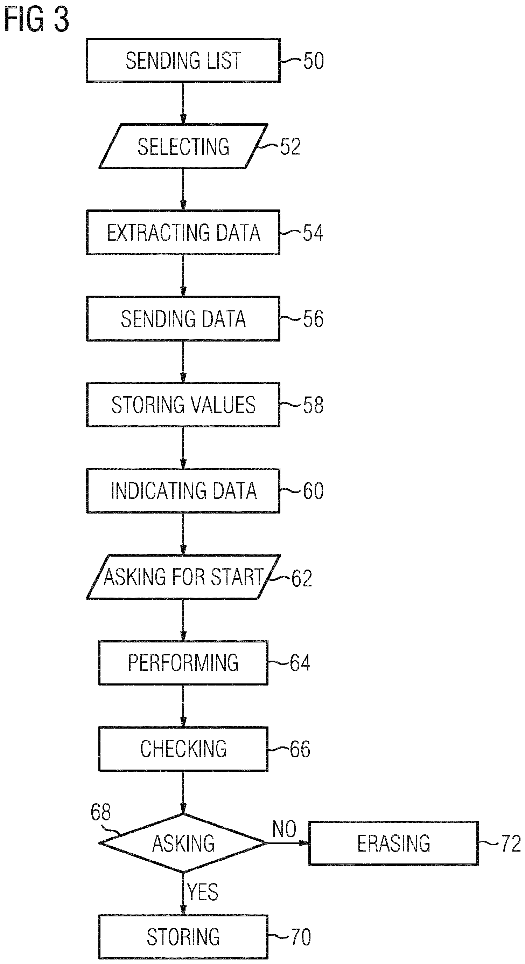

FIG 3 illustrates a schematic flow chart diagram of a selection of a standard cooking function and cooking parameters from the remote control device 10 according to the preferred embodiment of the present invention. The remote control device 10 is connected to the domestic appliance 12 and/or 14.

In a first step 50 the list of the available cooking processes is sent to the terminal, wherein said terminal includes at least one dedicated application software (APP). In a next step 52 the desired cooking processes is selected by the user. Then, data for the selected cooking process are extracted on the terminal in a step 54. In a next step 56 the extracted data are sent to the domestic appliance 12 and/or 14. Then, the according values are stored on the control device of the domestic appliance 12 and/or 14 in a step 58. Next, the extracted data are indicated on a display of the domestic appliance 12 and/or 14 in a step 60. For example, the message "a data transfer successfully done" is indicated on the terminal. In a step 62 the user is asked for starting the cooking process by the application software and/or on the domestic appliance 12 and/or 14.

The cooking process is performed in a step 64. Then, the finish conditions are checked in a step 66. In a step 68 the user is asked for store the extracted data as preferred settings. At last, said extracted data are either stored in a step 70 or deleted in a step 72. For example, the extracted data are stored in the domestic appliance 12 and/or 14 are sent to the remote control device 10, the data cloud 16, the data base or control device and stored therein.

According to the present invention, memory-intensive programs and/or data are stored in the memory of the control device, while the set and actual parameter values are transferred between the remote control device 10 and the domestic appliances 12 and 14 via the data cloud 16. The connection via the data cloud 16 guarantees a reliable connection between the remote control device 10 and the domestic appliances 12 and 14, in particular when the user with the remote control device 10 is in an arbitrary place.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: remote control device
- 12: domestic appliance, cooking hob
- 14: domestic appliance, cooking oven
- 16: data cloud
- 18: primary bidirectional connection
- 20: secondary bidirectional connection
- 22: secondary bidirectional connection
- 30: step of sending the list of available cooking processes
- 32: step of selecting the desired cooking process by the user
- 34: step of extracting data on the terminal
- 36: step of sending extracted data to the domestic appliance
- 38: step of storing values on the domestic appliance
- 40: step of displaying extracted data
- 42: step of asking the user for starting the cooking process
- 50: step of sending the list of available cooking processes
- 52: step of selecting the desired cooking process by the user
- 54: step of extracting data on the terminal
- 56: step of sending the extracted data to the domestic appliance
- 58: step of storing values in the domestic appliance
- 60: step of indicating the extracted data on a display
- 62: step of asking the user for starting the cooking process
- 64: step of performing the cooking process
- 66: step of checking finish conditions of the cooking process
- 68: step of asking if parameters should be stored or not
- 70: step of storing the cooking process
- 72: step of erasing the cooking process

## Claims

1. A remote control system for controlling at least one operation of one or more domestic appliances (12, 14), wherein said remote control system comprises:
- a remote control device (10) for inputting one or more set parameter values relating to the operation of the domestic appliance (12, 14),
- a data cloud (16) or data base connected or connectable to the remote control device (10) via a primary bidirectional connection (18), and
- at least one control device for controlling the domestic appliance (12, 14) and connected or connectable to the data cloud (16) or data base via a secondary bidirectional connection (20, 22).

2. The remote control system according to claim 1,
**characterised in that**
the remote control system comprises at least one application program for controlling the operation of the domestic appliance (12, 14), wherein said application program is stored or storable in a memory of the control device.

3. The remote control system according to claim 1 or 2,
**characterised in that**
the control device is an integrated part of the corresponding domestic appliance (12, 14) and/or arranged close to said corresponding domestic appliance (12, 14).

4. The remote control system according to any one of the preceding claims,
**characterised in that**
the control device is provided for detecting actual parameter values of the operation and for sending said actual parameter values to the remote control device (10) via the data cloud (16) or data base.

5. The remote control system according to any one of the preceding claims,
**characterised in that**
the remote control device (10) includes application software for inputting the set parameter values.

6. The remote control system according to claim 4 or 5,
**characterised in that**
the remote control device (10) includes application software for monitoring the actual parameter values detected by the control device.

7. The remote control system according to any one of the preceding claims,
**characterised in that**
the control device is provided for sending a feedback to the remote control device (10) via the data cloud (16) or data base, if said control device has received the set parameter values from the remote control device (10).

8. The remote control system according to any one of the preceding claims,
**characterised in that**
the primary bidirectional connection (18) between the remote control device (10) and the data cloud (16) is a wireless connection.

9. The remote control system according to any one of the preceding claims,
**characterised in that**
the secondary bidirectional connection (20, 22) between the control device and the data cloud (16) or data base is a wireless or a wired connection or a combination thereof.

10. The remote control system according to any one of the preceding claims,
**characterised in that**
the remote control device (10) is a smart phone, a tablet, a notebook and/or a personal computer.

11. The remote control system according to any one of the preceding claims,
**characterised in that**
at least one domestic appliance (12, 14) is a cooking appliance (12, 14), wherein preferably at least one cooking recipe is stored or storable in the memory of the control device.

12. A method for remote controlling at least one operation of one or more domestic appliances (12, 14), wherein said method comprises the steps of:
- inputting one or more set parameter values for the operation of the domestic appliance (12, 14) by a remote control device (10),
- sending said set parameter values to a control device of the corresponding domestic appliance (12, 14) by the remote control device (10) via a data cloud (16) or data base,
- performing the operation of the domestic appliance (12, 14) on the basis of the set parameter values and an application program stored in a memory of the control device of the domestic appliance (12, 14),
- detecting actual parameter values of the operation of the domestic appliance (12, 14) by the control device, and
- sending said actual parameter values to the remote control device (10) by the control device via the data cloud (16) or data base.

13. The method according to claim 12,
**characterised in that**
the remote control device (10) is connected or connectable to the data cloud (16) or data base via a primary bidirectional connection (18), while the control device is connected or connectable to the data cloud (16) or data base via a secondary bidirectional connection (20, 22).

14. The method according to claim 12 or 13,
**characterised in that**
the control device sends a feedback to the remote control device (10), if said control device has received the set parameter values from the remote control device (10).

15. The method according to any one of the claims 12 to 14,
**characterised in that**
the method is performed by the remote control system according to any one of the claims 1 to 11.
